(19) Europäisches Patentamt
European Patent Office
Office européen des brevets

(11) **EP 3 958 629 A1**

(12) **EUROPEAN PATENT APPLICATION**
published in accordance with Art. 153(4) EPC

(43) Date of publication:
**23.02.2022 Bulletin 2022/08**

(21) Application number: **19951642.8**

(22) Date of filing: **07.11.2019**

(51) International Patent Classification (IPC):
**H04W 72/04** (2009.01)   **H04W 72/12** (2009.01)

(52) Cooperative Patent Classification (CPC):
**H04W 72/04; H04W 72/12**

(86) International application number:
**PCT/CN2019/116421**

(87) International publication number:
**WO 2021/087925 (14.05.2021 Gazette 2021/19)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **XU, Jing
Dongguan, Guangdong 523860 (CN)**
• **XU, Weijie
Dongguan, Guangdong 523860 (CN)**

(74) Representative: **Manitz Finsterwald
Patent- und Rechtsanwaltspartnerschaft mbB
Martin-Greif-Strasse 1
80336 München (DE)**

(54) **METHOD FOR CONFIGURING TRANSMISSION RESOURCE CANCELLATION INDICATION INFORMATION, NETWORK APPARATUS, AND TERMINAL APPARATUS**

(57) The present disclosure provides a method for configuring transmission-resource-cancelation indication information, a terminal device, and a network device. The method includes receiving configuration information from a network device, where the configuration information is used for configuring a first reference frequency-domain resource of transmission-resource-cancelation indication information of a first carrier, and the configuration information includes a resource range of the first reference frequency-domain resource.

FIG. 2

**Description**

TECHNICAL FIELD

This disclosure relates to the technical field of data transmission, and in particular to a method for configuring transmission-resource-cancelation indication information, a network device, and a terminal device.

BACKGROUND

With the development of network technology, fifth generation (5G) and even higher-level network technology have gradually entered people's lives.

The network technology may include multiple services, and various services have different requirements on amount of transmitted data and a latency. When data of multiple services are simultaneously transmitted in a system corresponding to the network technology, a transmission collision may occur, which may result in that multiple services interfere with each other, and accordingly the latency requirements of the services cannot be met.

SUMMARY

A main purpose of the present disclosure is to provide a method for configuring transmission-resource-cancelation indication information, which aims to solve a problem that latency requirements of services cannot be met.

In a first aspect, a method for configuring transmission-resource-cancelation indication information is provided. The method is applied to a terminal device and includes receiving configuration information from a network device, where the configuration information is used for configuring a first reference frequency-domain resource of transmission-resource-cancelation indication information of a first carrier.

In a second aspect, a method for configuring transmission-resource-cancelation indication information is provided. The method is applied to a network device and includes transmitting configuration information to a terminal device, where the configuration information is used for configuring a first reference frequency-domain resource of transmission-resource-cancelation indication information of a first carrier.

In a third aspect, a terminal device is provided. The terminal device is configured to execute the method in the first aspect or various implementation manners of the first aspect. The terminal device includes a functional module for executing the method in the first aspect or various implementation manners of the first aspect.

In a fourth aspect, a network device is provided. The network device is configured to execute the method in the second aspect or various implementation manners of the second aspect. The network device includes a functional module for executing the method in the second aspect or various implementation manners of the second aspect.

In a fifth aspect, a terminal device is provided. The terminal device includes a processor, a memory, and a computer program stored in the memory and capable of running in the processor. The computer program is configured to execute the method in the second aspect or various implementation manners of the second aspect.

In a sixth aspect, a computer-readable storage medium is provided. The computer-readable storage medium stores a computer program. The computer program is configured to execute the method in the first aspect or various implementation manners of the first aspect.

In a sixth aspect, a network device is provided. The network device includes a processor, a memory, and a computer program stored in the memory and capable of running in the processor. The computer program is configured to execute the method in the second aspect or various implementation manners of the second aspect.

In an eighth aspect, a computer-readable storage medium is provided. The computer-readable storage medium stores a computer program. The computer program is configured to execute the method in the second aspect or various implementation manners of the second aspect.

According to the technical solution in the implementation of the present disclosure, the configuration information of the transmission-resource-cancelation indication information includes the reference frequency-domain resource, so that when the terminal device receives the configuration information from the network device, according to the reference frequency-domain resource in the configuration information, the terminal device stops using a frequency-domain resource shared by services of the terminal device and services of other terminal devices to perform data transmission, so that latency requirements of services can be met.

BRIEF DESCRIPTION OF THE DRAWINGS

FIG. 1 is a schematic diagram illustrating that multiple terminals use a common frequency-domain resource to perform data transmission according to an implementation of the present disclosure.

FIG. 2 is a schematic diagram illustrating a method for configuring transmission-resource-cancelation indication information according to an implementation of the present disclosure.

FIG. 3 is a schematic block diagram illustrating a terminal device according to an implementation of the present disclosure.

FIG. 4 is a schematic block diagram illustrating a network device according to an implementation of the present disclosure.

FIG. 5 is a schematic block diagram illustrating a communication device according to an implementation of the present disclosure.

FIG. 6 is a schematic block diagram illustrating a chip according to an implementation of the present disclosure.

FIG. 7 is a schematic block diagram illustrating a communication system according to an implementation of the present disclosure.

DETAILED DESCRIPTION

It is to be understood that implementations described here are only used to explain the present disclosure, but not to limit the present disclosure.

The technical solutions in the implementations of the present disclosure can be applied to various communication systems, such as a global system of mobile communication (GSM), a code division multiple access (CDMA) system, a wideband code division multiple access (WCDMA) system, general packet radio service (GPRS), a long term evolution (LTE) system, an LTE frequency division duplex (FDD) system, an LTE time division duplex (TDD) system, a universal mobile telecommunication system (UMTS), a worldwide interoperability for microwave access (WiMAX) communication system, a fifth generation (5G) system, or the like.

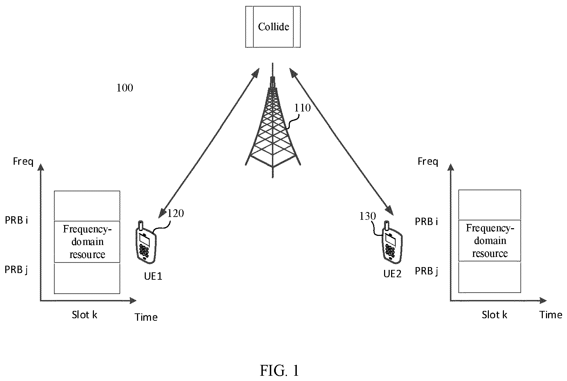

For example, a communication system 100 in an implementation of the present disclosure is illustrated in FIG. 1. The communication system 100 may include a network device 110. The network device 110 may be a device capable of communicating with a terminal device 120 (or called a communication terminal, a terminal or user equipment 1 (UE1), UE1 is a user-experience terminal). The network device 110 can provide communication coverage for a specific geographic area and communicate with terminal devices in the coverage area. In an implementation, the network device 110 may be a base transceiver station (BTS) in the GSM or CDMA system, a NodeB (NB) in the WCDMA system, an evolutional node B (eNB or eNodeB) in the LTE system, or a wireless controller in a cloud radio access network (CRAN). In an implementation, the network device 110 may be a mobile switch center, a relay station, an access point, a vehicle-mounted device, a wearable device, a hub, a switch, a network bridge, a router, a network device in the 5G network, a network device in a future evolution public land mobile network (PLMN), or the like.

The communication system 100 further includes at least one terminal device 120 in the coverage area of the network device 110. The "terminal device" used herein may include but is not limited to a device coupled via a wired line, and/or other data connection /network, and/or a wireless interface, and/or a device communicating with another terminal to receive/transmit communication signals, and/or an Internet of Things (IoT) device. Examples of the wired line may include, but are not limited to, a public switched telephone network (PSTN), a digital subscriber line (DSL), a digital cable, and a direct connection cable. Examples of the wireless interface may include, but are not limited to, a wireless interface for a cellular network, a WLAN, a digital television network (such as a digital video broadcasting-handheld (DVB-H) network), a satellite network, and an amplitude modulation-frequency modulation (AM-FM) broadcast transmitter. A terminal configured to communicate via the wireless interface may be called a "wireless communication terminal", a "wireless terminal", or a "mobile terminal". Examples of a mobile terminal may include, but are not limited to, a satellite or cellular telephone, a personal communication system (PCS) terminal capable of combining cellular radio telephone and data processing, fax and data communication, a personal digital assistant (PDA) equipped with radio telephone, pager, Internet/Intranet access, web browsing, a notebook, a calendar, and/or a global positioning system (GPS) receiver, and a conventional laptop and/or a handheld receiver or other electronic devices equipped with a radio telephone transceiver. The terminal device may refer to an access terminal, UE, a user unit, a user station, a mobile station, a remote station, a remote terminal, a mobile device, a user terminal, a terminal, a wireless communication device, a user agent, or a user device. The access terminal may be a cellular phone, a cordless phone, a session initiation protocol (SIP) phone, a wireless local loop (WLL) station, a PDA, a handheld device with a wireless communication function, a computing device or other processing devices coupled with wireless modems, a vehicle-mounted device, a wearable device, a terminal device in the 5G network or the future evolution PLMN, or the like.

In an implementation, the terminal devices 120 may communicate with each other via device to device (D2D) communication.

In an implementation, the 5G system or 5G network may also be referred to as a new radio (NR) system or an NR network.

As an example, FIG. 1 illustrates a network device and two terminal devices. In an implementation, the communication system 100 may include multiple network devices, and in the coverage area of each network device other numbers of terminal devices may be included, which is not limited in the implementation of the present disclosure.

In an implementation, the communication system 100 may further include a network controller, a mobility management entity (MME), or other network entities, which is not limited in the implementation of the present disclosure.

It is to be understood that in the implementation of the present disclosure, in a network/system, a device with a communication function may be called a communication device. The communication system 100 illustrated in FIG. 1 is taken as an example. The communication devices may include the network device 110 and the terminal device 120 that have a communication function. The network device 110 and the terminal device 120 may be the devices described above, which is not repeated herein. The communication devices may further include other devices in the communication system 100, such as the network controller, the MME, or other network entities, which is not limited in the implementation of the present disclosure.

It is to be understood that the terms "system" and "network" are often used interchangeably in the specification. The term "and/or" in the specification only describes an association relationship of associated objects, which means that there may be three relationships, for example, A and/or B, which may mean that: A exists alone, A and B both exist, and B exists alone. In addition, the character "/" in the specification generally means that an object before "/" and an object after "/" are in an "or" relationship.

In an NR system, there are two services: ultra-reliable and low latency communications (URLLC) service and enhanced mobile broadband (eMBB) service. The URLLC service is to achieve ultra-high reliability (for example, 99.999%) transmission within a very low latency (for example, 1ms). The eMBB service is insensitive to latency, but the amount of transmitted data may be large. For a scenario where the URLLC service and the eMBB service coexist, in order to realize URLLC instant transmission, when URLLC transmission and eMBB transmission collide, the URLLC service and the eMBB service interfere with each other, thereby affecting demodulation performance of the URLLC service. Retransmission can reduce this impact, but retransmission can cause increase of a transmission latency of the URLLC service, that is, latency requirements of services such as the URLLC service cannot be met.

To solve a problem that latency requirements of services cannot be met, in implementations of the present disclosure, a method for configuring transmission-resource-cancelation indication information is provided. The transmission-resource-cancelation indication information includes a reference frequency-domain resource, so that when a terminal device receives configuration information from a network device, according to the reference frequency-domain resource in the configuration information, the terminal device stops using a frequency-domain resource shared by services of the terminal device and services of other terminal devices to perform data transmission, so that latency requirements of services can be met.

In an implementation, the terminal device receives the configuration information from the network device, and the configuration information is used for configuring a first reference frequency-domain resource of the transmission-resource-cancelation indication information of a first carrier.

The network device may be a base station. The base station can transmit data on a carrier(s), and the terminal device can transmit data on one or more carriers. Take 5G technology as an example, the 5G technology includes the eMBB service, the URLLC service, and so on. The URLLC service is to achieve ultra-high reliability (for example, 99.999%) transmission within a very low latency (for example, 1ms). The eMBB service is insensitive to a latency, but the amount of transmitted data may be relatively large. The URLLC service has a higher latency requirement than the eMBB service. Therefore, when the URLLC service and the eMBB service uses a common frequency-domain resource to perform data transmission, the URLLC service and the eMBB service may collide, which may result in increase of the latency of the URLLC service. The frequency-domain resource may be a resource block (RB), a physical resource block (PRB), a resource block group (RBG), or a bandwidth part (BWP). The first reference frequency-domain resource is a frequency-domain resource, i.e., a frequency-domain resource on the first carrier.

When the terminal device needs to transmit data of a first service, the terminal device sends a request to the network device. The network device parses the request to determine the first frequency-domain resource used by the data of the first service, and allocates the first frequency-domain resource to the terminal device, so that the terminal device can transmit the data of the first service on the first frequency-domain resource. However, the network device has previously allocated the first frequency-domain resource to another terminal device for transmission of data of a second service. In this case, the terminal device corresponding to the first service and the terminal device corresponding to the second service use the same frequency-domain resource to perform data transmission, and accordingly transmission of the data of the first service and transmission of the data of the second service collide. Referring to FIG. 1, FIG. 1 illustrates that the base station calls a same frequency-domain resource to transmit data of a service corresponding to UE1 and data of a service corresponding to UE2. The UE is the terminal device in the implementations.

The network device allocates a frequency-domain resource to the terminal device, so that the terminal device performs data transmission on the frequency-domain resource. If the network device allocates the same frequency-domain resource to multiple terminal devices, the network device generates configuration information and then sends the configuration information to each terminal device, so that the terminal device terminates data transmission on the same frequency-domain resource. The configuration information configures the first reference frequency-domain resource of the transmission-resource-cancelation indication information of the first carrier. It should be noted that a terminal device that preferentially transmits data still uses the frequency-domain resource to perform data transmission. For example, the network device allocates the same frequency-domain resource to a terminal device corresponding to the URLLC service and a terminal device corresponding to the eMBB service. The network device generates the configuration information and sends the configuration information to the two terminal devices, so that the terminal device corresponding to the eMBB service terminates data transmission on the same frequency-domain resource.

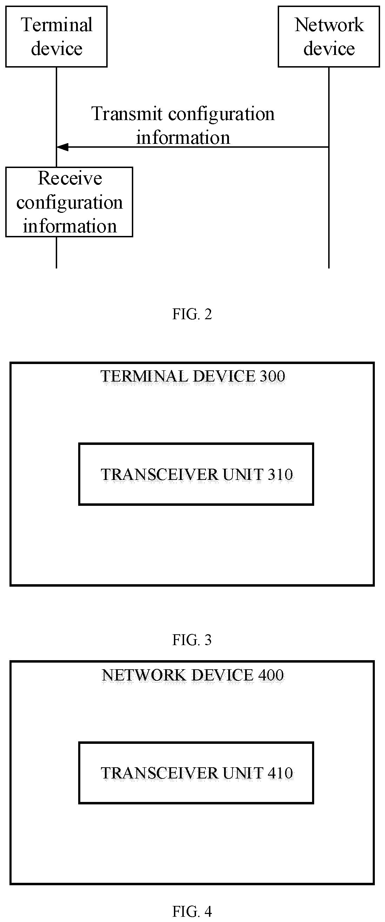

Referring to FIG. 2, after the network device generates the configuration information, the network device sends the configuration information to the terminal device, and the terminal device receives the configuration information. The terminal device parses the configuration information to determine the reference frequency-domain resource, so that the terminal device performs transmission-resource cancelation on the common frequency-domain resource. It should be noted that multiple terminal devices can transmit data on the same carrier, and thus the network device can send the same configuration information to each terminal device. In another implementation, different terminal devices can transmit data on different carriers, since different carriers correspond to different configuration information, the network device sends different configuration information to different terminal devices.

According to the technical solution in the implementation of the present disclosure, the configuration information of the transmission-resource-cancelation indication information includes the reference frequency-domain resource, so that when the terminal device receives the configuration information from the network device, according to the reference frequency-domain resource in the configuration information, the terminal device stops using a frequency-domain resource shared by services of the terminal device and services of other terminal devices to perform data transmission, so that latency requirements of services can be met.

In an implementation, the configuration information indicates a start point of the first reference frequency-domain resource and an end point of the first reference frequency-domain resource. In another implementation, the configuration information indicates the start point of the first reference frequency-domain resource and a resource range of the first reference frequency-domain resource.

The start point and end point of the first reference frequency-domain resource may be any positions of the first carrier.

The resource range can be characterized by a length, and the length can be characterized by the number of frequency-domain-resource units, where the frequency-domain-resource unit may include an RB, a PRB, an RBG, or a BWP. In case that the start point of the reference frequency-domain resource is RB5 and the length is 46, the reference frequency-domain resource is RB5~RB50, and frequency-domain-range parameters are RB5 and RB length 46. Take point A as the start point of the reference frequency-domain resource, if the point A is a position of RB20, in the frequency-domain-range parameters of the reference frequency-domain resource the start point is -15 (5-20) and the length is 46 (50-5+1). If a start point of a carrier is the start point of the reference frequency-domain resource and the start point of the carrier is a position of RB0, in the frequency-domain-range parameters of the reference frequency-domain resource the start point is 5 (5-0) and the length is 46 (50-5+1).

The start point and the end point can be configured in a direct-indication manner, or the start point and the end point can be configured in a calculation-indication manner. One implementation of the calculation-indication manner is to convert the start point and the end point into a bitstream. The direct-indication manner means that the terminal device can directly obtain the start point and the end point of the first reference frequency-domain resource according to the configuration information. The calculation-indication manner means that the terminal device needs to perform a calculation on the bitstream in the configuration information, and then obtains the start point and the end point of the first reference frequency-domain resource according to a calculation result. For example, a resource indication value (RIV) of the bitstream can be determined according to a start position of the RB and the number of RBs. The start position of the RB and the number of RBs can also be calculated according to the RIV. The RIV is calculated as follows:

$$\text{if } (L_{RBs} - 1) \le \left\lfloor N_{BWP}^{size} / 2 \right\rfloor$$

$$\text{then } RIV = N_{BWP}^{size}(L_{RBs} - 1) + RB_{start}$$

$$\text{else } RIV = N_{BWP}^{size}(N_{BWP}^{size} - L_{RBs} + 1) + (N_{BWP}^{size} - 1 - RB_{start})$$

where $L_{REs} \ge 1$ and shall not exceed $N_{BWP}^{size} - RB_{start}$

Certainly, the start point and the resource range can also be configured in a direct-indication manner or a calculation-indication manner.

In an implementation, the start point of the first reference frequency-domain resource is one of the following positions: point A (absolute frequency-domain position) of the first carrier, a start point of the first carrier, a position of a center frequency of the first carrier, a start point of a reference bandwidth part (BWP), an end point of the reference BWP, a start point of a synchronization signal block (SSB), an end point of the SSB, a start point of a control resource set zero (CORESET#0), and an end point of the CORESET#0. In another implementation, the start point of the first reference frequency-domain resource is determined according to one of the following positions: the point A of the first carrier, the start point of the first carrier, the position of the center frequency of the first carrier, the start point of the reference BWP, the end point of the reference BWP, the start point of the SSB, the end point of the SSB, the start point of the CORESET#0, and the end point of the CORESET#0. For example, the network device can determine the next position or the previous position of one of the above positions as the start point of the reference frequency-domain resource.

For example, take the point A as the start point, if the point A is a position of RB20, in the frequency-domain-range parameters of the reference frequency-domain resource the start point is -15 (5-20) and the end point is 30 (50-20). Take the start point of the carrier as the start point of the reference frequency-domain resource, if the start point of the carrier is the position of RB0, in the frequency-domain-range parameters of the reference frequency-domain resource the start point is 5 (5-0) and the end point is 50 (50-0).

In an implementation, the end point of the first reference frequency-domain resource is determined according to one of the following positions: the point A of the first carrier, the start point of the first carrier, the position of the center frequency of the first carrier, the start point of the reference BWP, the end point of the reference BWP, the start point of the SSB, the end point of the SSB, the start point of the CORESET#0, and the end point of the CORESET#0. That is, the end point of the first reference frequency-domain resource may be the point A of the first carrier, the start point of the first carrier, the position of the center frequency of the first carrier, the start point of the reference BWP, the end point of the reference BWP, the start point of the S SB, the end point of the SSB, the start point of the CORESET#0, or the end point of the CORESET#0. In another implementation, the end point of the first reference frequency-domain resource can be determined according to the point A of the first carrier, the start point of the first carrier, the position of the center frequency of the first carrier, the start point of the reference BWP, the end point of the reference BWP, the start point of the SSB, the end point of the SSB, the start point of the CORESET#0, or the end point of the CORESET#0.

In an implementation, the reference BWP is a BWP used for initial access, a currently activated BWP, or a target BWP configured by the network device. The BWP used for initial access refers to a BWP used when the terminal device first accesses the first carrier. The currently activated BWP refers to a BWP available to the terminal device in the first carrier, and before the BWP available to the terminal device is activated, the terminal device needs to perform identity verification on the BWP available to the terminal device. The target BWP refers to a BWP configured by the network device for the terminal device.

In an implementation, the resource range of the first reference frequency-domain resource is a frequency-domain range corresponding to one or more PRBs, a frequency-domain range corresponding to one or more RBGs, or a frequency-domain range corresponding to one or more BWPs. Certainly, the resource range of the first reference frequency-domain resource can be determined according to the frequency-domain range corresponding to one or more PRBs, the frequency-domain range corresponding to one or more RBGs, and the frequency-domain range corresponding to one or more BWPs, which is not limited herein.

In an implementation, the configuration information indicates the first reference frequency-domain resource via a bitmap. Each bit in the bitmap indicates one PRB, one RBG, or one BWP. For example, if the bitmap is 0110, it indicates that a second PRB and a third PRB are both the first reference frequency-domain resource, and a first PRB and a fourth PRB are not the first reference frequency-domain resource. It can be understood that the first carrier includes multiple frequency-domain-resource units. The frequency-domain-resource unit may include a PRB, an RBG, or a BWP. Some frequency-domain-resource units are reference frequency-domain-resource units, and some frequency-domain-resource units are non-reference frequency-domain-resource units. The frequency-domain-resource units in the first carrier are indicated via different indications, for example, 1 indicates the reference frequency-domain-resource unit, and 0 indicates the non-reference frequency-domain-resource unit.

In an implementation, the configuration information indicates a first BWP set. The first reference frequency-domain resource includes a BWP in the first BWP set. The first BWP set includes one or more BWPs. In another implementation, the first reference frequency-domain resource includes an RBG in a first RBG set. The first RBG set includes one or more RBGs. In yet another implementation, the first reference frequency-domain resource includes a PRB in a first PRB set. The first PRB set includes one or more PRBs. In yet another implementation, the first reference frequency-domain resource includes an RB in a first RB set. The first RB set includes one or more RBs.

In addition, different terminal devices use different carriers to perform data transmission, and the configuration information further indicates a second BWP set. A second reference frequency-domain resource includes a BWP in the second BWP set. The second BWP set includes one or more BWPs. In another implementation, the second reference frequency-domain resource includes an RBG in a second RBG set. The second RBG set includes one or more RBGs. In yet another implementation, the second reference frequency-domain resource includes a PRB in a second PRB set. The second PRB set includes one or more PRBs. In yet another implementation, the second reference frequency-domain resource includes an RB in a second RB set. The first RB set includes one or more RBs.

In an implementation, the terminal device determines the first reference frequency-domain resource according to the configuration information. The configuration information is higher-layer signaling. For example, the higher-layer signaling may be radio resource control (RRC) signaling. The network device indicates the first reference frequency-domain resource via the RRC signaling.

In an implementation, the terminal device determines the first reference frequency-domain resource according to the configuration information and physical-layer signaling. That is, the terminal device determines the first reference frequency-domain resource according to the higher-layer signaling and the physical-layer signaling. The physical-layer signaling may be downlink control information (DCI), that is, the network device configures the first reference frequency-domain resource via the RRC signaling and the DCI.

In an implementation, the configuration information further configures the second reference frequency-domain resource of transmission-resource-cancelation indication information of a second carrier. The first reference frequency-domain resource may be different from or the same as the second reference frequency-domain resource. The first carrier and the second carrier may correspond to different terminal devices. That is, different terminal devices may receive same configuration information or different configuration information.

In an implementation, a network device transmits configuration information to a terminal device, and the configuration information is used for configuring a first reference frequency-domain resource of transmission-resource-cancelation indication information of a first carrier.

The network device may be a server corresponding to a base station. The base station can transmit data on a carrier(s), and the terminal device can transmit data on one or more carriers. Take 5G technology as an example, the 5G technology includes the eMBB service, the URLLC service, and so on. The URLLC service is to achieve ultra-high reliability (for example, 99.999%) transmission within a very low latency (for example, 1ms). The eMBB service is insensitive to a latency, but the amount of transmitted data may be relatively large. The URLLC service has a higher latency requirement than the eMBB service. Therefore, when the URLLC service and the eMBB service use a common frequency-domain resource to perform data transmission, the URLLC service and the eMBB service may collide, which may result in increase of the latency of the URLLC service. The frequency-domain resource may be an RB, a PRB, an RBG, or a BWP

The network device can first define data-transmission priorities of various services, and the data-transmission priorities of the services can be determined according to latency requirements of the services. The higher a latency requirement, the higher a data-transmission priority of a service corresponding to the latency requirement. That is, the network device preferentially calls a frequency-domain resource to transmit data of a service with the highest latency requirement. After setting the data-transmission priorities of various services, the network device stores an association relationship between the data-transmission priorities and the services.

When the terminal device needs to transmit data of a first service, the terminal device sends a request to the network device. The network device parses the request to determine a first frequency-domain resource used by the data of the first service, and allocates the first frequency-domain resource to the terminal device, so that the terminal device can transmit the data of the first service on the first frequency-domain resource. However, the network device has previously allocated the first frequency-domain resource to another terminal device for transmission of data of a second service. In this case, the terminal device corresponding to the first service and the terminal device corresponding to the second service use the same frequency-domain resource to perform data transmission, and accordingly transmission of the data of the first service and transmission of the data of the second service collide. Referring to FIG. 1, FIG. 1 illustrates that the base station calls a same frequency-domain resource to transmit data of a service corresponding to UE1 and data of a service corresponding to UE2. The UE is the terminal device in the implementations.

It should be noted that some services do not have a high latency requirement, so the network device can call the first frequency-domain resource to transmit data of multiple services, that is, the same frequency-domain resource is used for transmission of data of multiple services. When the network device needs to call the first frequency-domain resource to transmit the data of the first service, the network device can first determine whether the first service has a high latency requirement, that is, determine whether a latency corresponding to the first service is lower than a preset threshold. If the latency corresponding to the first service is lower than the preset threshold, it is necessary to terminate transmission of data of other services except the first service on the first frequency-domain resource.

The network device allocates a frequency-domain resource to the terminal device, so that the terminal device performs data transmission on the frequency-domain resource. If the network device allocates the same frequency-domain resource to multiple terminal devices, the network device generates configuration information and then sends the configuration information to each terminal device, so that the terminal device terminates data transmission on the same frequency-domain resource. The configuration information configures the first reference frequency-domain resource of the transmission-resource-cancelation indication information of the first carrier. It should be noted that a terminal device that preferentially transmits data still uses the frequency-domain resource to perform data transmission. For example, the network device allocates a same frequency-domain resource to a terminal device corresponding to the URLLC service and a terminal device corresponding to the eMBB service. The network device generates configuration information and sends the configuration information to the two terminal devices, so that the terminal device corresponding to the eMBB service terminates data transmission on the same frequency-domain resource.

Referring to FIG. 2, after the network device generates the configuration information, the network device sends the configuration information to the terminal device, and the terminal device receives the configuration information. The terminal device parses the configuration information to determine the reference frequency-domain resource, so that the terminal device performs transmission-resource cancelation on a common frequency-domain resource. It should be noted that multiple terminal devices can transmit data on a same carrier, and thus the network device can send same configuration information to each terminal device. In another implementation, different terminal devices can transmit data on different carriers, and since different carriers correspond to different configuration information, the network device sends different configuration information to different terminal devices.

After receiving the configuration information, a terminal device corresponding to another service determines the first reference frequency-domain resource according to the configuration information, and determines a common frequency-domain resource between the first reference frequency-domain resource and a frequency-domain resource required by the other service of the terminal device, so that the terminal device stops using the common frequency-domain resource to transmit data of the other service. Similarly, terminal devices corresponding to other services stop using a common frequency-domain resource to transmit data of the other services, so that a frequency-domain resource required by a target service is not occupied by the other services, and increase of a latency of the target service can be avoided.

According to the technical solution in the implementation of the present disclosure, the configuration information of the transmission-resource-cancelation indication information includes the reference frequency-domain resource. The network device transmits the configuration information to the terminal device, so that when the terminal device receives the configuration information from the network device, according to the reference frequency-domain resource in the configuration information, the terminal device stops using a frequency-domain resource shared by services of the terminal device and services of other terminal devices to perform data transmission, so that latency requirements of services can be met.

In an implementation, the configuration information indicates a start point of the first reference frequency-domain resource and an end point of the first reference frequency-domain resource. In another implementation, the configuration information indicates the start point of the first reference frequency-domain resource and a resource range of the first reference frequency-domain resource.

The start point and end point of the first reference frequency-domain resource may be any positions of the first carrier.

The resource range can be characterized by a length, and the length can be characterized by the number of frequency-domain-resource units, where the frequency-domain-resource unit may include an RB, a PRB, an RBG, or a BWP. In case that the start point of the reference frequency-domain resource is RB5 and the length is 46, the reference frequency-domain resource is RB5~RB50, and frequency-domain-range parameters are RB5 and RB length 46. Take point A as the start point of the reference frequency-domain resource, if the point A is a position of RB20, in the frequency-domain-range parameters of the reference frequency-domain resource the start point is -15 (5-20) and the length is 46 (50-5+1). If a start point of a carrier is the start point of the reference frequency-domain resource, and the start point of the carrier is a position of RB0, in the frequency-domain-range parameters of the reference frequency-domain resource the start point is 5 (5-0) and the length is 46 (50-5+1).

The start point and the end point can be configured in a direct-indication manner, or the start point and the end point can be configured in a calculation-indication manner. One implementation of the calculation-indication manner is to convert the start point and the end point into a bitstream. The direct-indication manner means that the terminal device can directly obtain the start point and the end point of the first reference frequency-domain resource according to the configuration information. The calculation-indication manner means that the terminal device needs to perform a calculation on the bitstream in the configuration information, and then obtains the start point and the end point of the first reference frequency-domain resource according to a calculation result. For example, a resource indication value (RIV) of the bitstream can be determined according to a start position of the RB and the number of RBs. The start position of the RB and the number of RBs can also be calculated according to the RIV. The RIV is calculated as follows:

$$\text{if } (L_{RBs} - 1) \le \left\lfloor N_{BWP}^{size} / 2 \right\rfloor$$

$$\text{then } RIV = N_{BWP}^{size} (L_{RBs} - 1) + RB_{start}$$

$$\text{else } RIV = N_{BWP}^{size} (N_{BWP}^{size} - L_{RBs} + 1) + (N_{BWP}^{size} - 1 - RB_{start})$$

where $L_{RBs} \ge 1$ and shall not exceed $N_{BWP}^{size} - RB_{start}$

Certainly, the start point and the resource range can also be configured in a direct-indication manner or the calculation-indication manner.

In an implementation, the start point of the first reference frequency-domain resource is one of the following positions: point A (absolute frequency-domain position) of the first carrier, a start point of the first carrier, a position of a center frequency of the first carrier, a start point of a reference BWP, an end point of the reference BWP, a start point of an SSB, an end point of the SSB, a start point of cCORESET#0, and an end point of the CORESET#0. In another implementation, the start point of the first reference frequency-domain resource is determined according to one of the following positions: the point A of the first carrier, the start point of the first carrier, the position of the center frequency of the first carrier, the start point of the reference BWP, the end point of the reference BWP, the start point of the SSB, the end point of the SSB, the start point of the CORESET#0, and the end point of the CORESET#0. For example, the network device can determine the next position or the previous position of one of the above positions as the start point of the reference frequency-domain resource.

For example, take the point A as the start point, if the point A is a position of RB20, in the frequency-domain-range parameters of the reference frequency-domain resource the start point is -15 (5-20) and the end point is 30 (50-20). Take the start point of the carrier as the start point of the reference frequency-domain resource, if the start point of the carrier is the position of RB0, in the frequency-domain-range parameters of the reference frequency-domain resource the start point is 5 (5-0) and the end point is 50 (50-0).

In an implementation, the end point of the first reference frequency-domain resource is determined according to one of the following positions: the point A of the first carrier, the start point of the first carrier, the position of the center frequency of the first carrier, the start point of the reference BWP, the end point of the reference BWP, the start point of the SSB, the end point of the SSB, the start point of the CORESET#0, and the end point of the CORESET#0. That is, the end point of the first reference frequency-domain resource may be the point A of the first carrier, the start point of the first carrier, the position of the center frequency of the first carrier, the start point of the reference BWP, the end point of the reference BWP, the start point of the S SB, the end point of the SSB, the start point of the CORESET#0, or the end point of the CORESET#0. In another implementation, the end point of the first reference frequency-domain resource can be determined according to the point A of the first carrier, the start point of the first carrier, the position of the center frequency of the first carrier, the start point of the reference BWP, the end point of the reference BWP, the start point of the SSB, the end point of the SSB, the start point of the CORESET#0, or the end point of the CORESET#0.

In an implementation, the reference BWP is a BWP used for initial access, a currently activated BWP, or a target BWP configured by the network device. The BWP used for initial access refers to a BWP used when the terminal device first accesses the first carrier. The currently activated BWP refers to a BWP available to the terminal device in the first carrier, and before the BWP available to the terminal device is activated, the terminal device needs to perform identity verification on the BWP available to the terminal device. The target BWP refers to a BWP configured by the network device for the terminal device.

In an implementation, the resource range of the first reference frequency-domain resource is a frequency-domain range corresponding to one or more PRBs, a frequency-domain range corresponding to one or more RBGs, or a frequency-domain range corresponding to one or more BWPs. Certainly, the resource range of the first reference frequency-domain resource can be determined according to the frequency-domain range corresponding to one or more PRBs, the frequency-domain range corresponding to one or more RBGs, and the frequency-domain range corresponding to one or more BWPs, which is not limited herein.

In an implementation, the configuration information indicates the first reference frequency-domain resource via a bitmap. Each bit in the bitmap indicates one PRB, one RBG, or one BWP. For example, if the bitmap is 0110, it indicates that a second PRB and a third PRB are both the first reference frequency-domain resource, and a first PRB and a fourth PRB are not the first reference frequency-domain resource. It can be understood that the first carrier includes multiple frequency-domain-resource units. The frequency-domain-resource unit may include a PRB, an RBG, or a BWP. Some frequency-domain-resource units are reference frequency-domain-resource units, and some frequency-domain-resource units are non-reference frequency-domain-resource units. The frequency-domain-resource units in the first carrier are indicated via different indications, for example, 1 indicates the reference frequency-domain-resource unit, and 0 indicates the non-reference frequency-domain-resource unit.

In an implementation, the configuration information indicates a first BWP set. The first reference frequency-domain resource includes a BWP in the first BWP set. The first BWP set includes one or more BWPs. In another implementation, the first reference frequency-domain resource includes an RBG in a first RBG set. The first RBG set includes one or more RBGs. In yet another implementation, the first reference frequency-domain resource includes a PRB in a first PRB set. The first PRB set includes one or more PRBs. In yet another implementation, the first reference frequency-domain resource includes an RB in a first RB set. The first RB set includes one or more RBs.

In addition, different terminal devices use different carriers to perform data transmission, and the configuration information further indicates a second BWP set. A second reference frequency-domain resource includes a BWP in the second BWP set. The second BWP set includes one or more BWPs. In another implementation, the second reference frequency-domain resource includes an RBG in a second RBG set. The second RBG set includes one or more RBGs. In yet another implementation, the second reference frequency-domain resource includes a PRB in a second PRB set. The second PRB set includes one or more PRBs. In yet another implementation, the second reference frequency-domain resource includes an RB in a second RB set. The first RB set includes one or more RBs.

In an implementation, the network device determines the configuration information according to the first reference frequency-domain resource and stores the configuration information. The configuration information is higher-layer signaling. For example, the higher-layer signaling may be RRC signaling. The network device indicates the first reference frequency-domain resource via the RRC signaling.

In an implementation, the network device determines the configuration information and physical-layer signaling according to the first reference frequency-domain resource and stores the configuration information and the physical-layer signaling. The physical-layer signaling may be DCI, that is, the network device configures the first reference frequency-domain resource via the RRC signaling and the DCI.

In an implementation, the configuration information further configures the second reference frequency-domain resource of transmission-resource-cancelation indication information of a second carrier. The first reference frequency-domain resource may be different from or the same as the second reference frequency-domain resource. The first carrier and the second carrier may correspond to different terminal devices. That is, different terminal devices may receive same configuration information or different configuration information.

The above describes the method for configuring transmission-resource-cancelation indication information in the implementations of the present disclosure in detail. The following will describe a network device and a terminal device in the implementations of the present disclosure in combination with FIGS. 3-7. As illustrated in FIG. 3, a terminal device 300 in the implementations of the present disclosure includes a transceiver unit 310.

The transceiver unit 310 is configured to receive configuration information from a network device, where the configuration information is used for configuring a first reference frequency-domain resource of transmission-resource-cancelation indication information of a first carrier.

In an implementation, the configuration information indicates a start point of the first reference frequency-domain resource and an end point of the first reference frequency-domain resource, or the configuration information indicates the start point of the first reference frequency-domain resource and a resource range of the first reference frequency-domain resource.

In an implementation, the start point of the first reference frequency-domain resource is one of the following positions: point A of the first carrier, a start point of the first carrier, a position of a center frequency of the first carrier, a start point of a reference BWP, an end point of the reference BWP, a start point of an SSB, an end point of the SSB, a start point of CORESET#0, and an end point of the CORESET#0. In another implementation, the start point of the first reference frequency-domain resource is determined according to one of the following positions: the point A of the first carrier, the start point of the first carrier, the position of the center frequency of the first carrier, the start point of the reference BWP, the end point of the reference BWP, the start point of the SSB, the end point of the SSB, the start point of the CORESET#0, and the end point of the CORESET#0.

In an implementation, the end point of the first reference frequency-domain resource is determined according to one of the following positions: the point A of the first carrier, the start point of the first carrier, the position of the center frequency of the first carrier, the start point of the reference BWP, the end point of the reference BWP, the start point of the SSB, the end point of the SSB, the start point of the CORESET#0, and the end point of the CORESET#0.

In an implementation, the reference BWP is a BWP used for initial access, a currently activated BWP, or a target BWP configured by the network device.

In an implementation, the resource range of the first reference frequency-domain resource is a frequency-domain range corresponding to one or more PRBs, a frequency-domain range corresponding to one or more RBGs, or a frequency-domain range corresponding to one or more BWPs.

In an implementation, the configuration information indicates the first reference frequency-domain resource via a bitmap.

In an implementation, each bit in the bitmap indicates one PRB, one RBG, or one BWP.

In an implementation, the configuration information indicates a first BWP set, and the first reference frequency-domain resource includes a BWP in the first BWP set.

In an implementation, determine the first reference frequency-domain resource according to the configuration information.

In an implementation, determine the first reference frequency-domain resource according to the configuration information and physical-layer signaling.

In an implementation, the configuration information is further used for configuring a second reference frequency-domain resource of transmission-resource-cancelation indication information of a second carrier, where the first reference frequency-domain resource is different from or the same as the second reference frequency-domain resource.

In an implementation, the first carrier and the second carrier correspond to different terminal devices.

It is to be understood that in the implementations of the present disclosure, the above and other operations and/or functions of various units of the terminal device 300 are respectively for realizing corresponding procedures performed by the terminal device in the above methods, which will not be repeated for the purpose of simplicity.

As illustrated in FIG. 4, a network device 400 in the implementations of the present disclosure includes a transceiver unit 410.

The transceiver unit 410 is configured to transmit configuration information to a terminal device, where the configuration information is used for configuring a first reference frequency-domain resource of transmission-resource-cancelation indication information of a first carrier.

In an implementation, the configuration information indicates a start point of the first reference frequency-domain resource and an end point of the first reference-domain resource, or the configuration information indicates the start point of the first reference frequency-domain resource and a resource range of the first reference-domain resource.

In an implementation, the start point of the first reference frequency-domain resource is one of the following positions: point A of the first carrier, a start point of the first carrier, a position of a center frequency of the first carrier, a start point of a reference BWP, an end point of the reference BWP, a start point of an SSB, an end point of the SSB, a start point of CORESET#0, and an end point of the CORESET#0. In another implementation, the start point of the first reference frequency-domain resource is determined according to one of the following positions: the point A of the first carrier, the start point of the first carrier, the position of the center frequency of the first carrier, the start point of the reference BWP, the end point of the reference BWP, the start point of the SSB, the end point of the SSB, the start point of the CORESET#0, and the end point of the CORESET#0.

In an implementation, the end point of the first reference frequency-domain resource is determined according to one of the following positions: the point A of the first carrier, the start point of the first carrier, the position of the center frequency of the first carrier, the start point of the reference BWP, the end point of the reference BWP, the start point of the SSB, the end point of the SSB, the start point of the CORESET#0, and the end point of the CORESET#0.

In an implementation, the reference BWP is a BWP used for initial access, a currently activated BWP, or a target BWP configured by the network device.

In an implementation, the resource range of the first reference frequency-domain resource is a frequency-domain range corresponding to one or more PRBs, a frequency-domain range corresponding to one or more RBGs, or a frequency-domain range corresponding to one or more BWPs.

In an implementation, the configuration information indicates the first reference frequency-domain resource via a bitmap.

In an implementation, each bit in the bitmap indicates one PRB, one RBG, or one BWP.

In an implementation, the configuration information indicates a first BWP set, and the first reference frequency-domain resource includes a BWP in the first BWP set.

In an implementation, configure the configuration information according to the first reference frequency-domain resource.

In an implementation, configure the configuration information and physical-layer signaling according to the first reference frequency-domain resource.

In an implementation, the configuration information is further used for configuring a second reference frequency-domain resource of transmission-resource-cancelation indication information of a second carrier, where the first reference frequency-domain resource is different from or the same as the second reference frequency-domain resource.

In an implementation, the first carrier and the second carrier correspond to different terminal devices.

It is to be understood that in the implementations of the present disclosure, the above and other operations and/or functions of various units of the network device 400 are respectively for realizing corresponding procedures performed by the network device in the above methods, which will not be repeated for the purpose of simplicity.

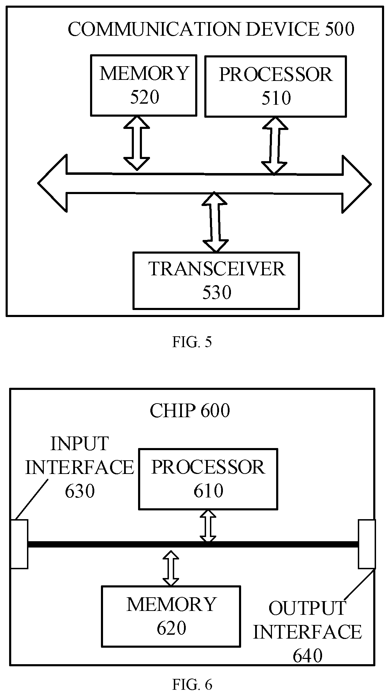

FIG. 5 is a schematic structural diagram illustrating a communication device 500 according to an implementation of the present disclosure. The communication device 500 illustrated in FIG. 5 includes a processor 510. The processor 510 can invoke and run a computer program in a memory to implement the methods in the implementation of the present disclosure.

In an implementation, as illustrated in FIG. 5, the communication device 500 further includes a memory 520. The processor 510 can invoke and run a computer program in the memory 520 to implement the method in the implementation of the present disclosure.

The memory 520 may be a single device independent of the processor 510, and may also be integrated in the processor 510.

In an implementation, as illustrated in FIG. 5, the communication device 500 may further include a transceiver 530. The processor 510 can control the transceiver 530 to communicate with other devices, for example, to transmit information or data to the other devices or receive information or data from the other devices.

In an implementation, the transceiver 530 may include a transmitter and a receiver. The transceiver 530 may further include one or more antennas.

The communication device 500 may be the network device in the implementations of the present disclosure, and the communication device 500 can implement corresponding procedures realized by the network device in the methods in the implementations of the present disclosure, which will not be repeated herein for simplicity.

The communication device 500 may be the mobile terminal/terminal device in the implementations of the present disclosure, and the communication device 500 can implement corresponding procedures realized by the mobile terminal/terminal device in the implementations of the present disclosure, which will not be repeated herein for simplicity.

FIG. 6 is a schematic structural diagram illustrating a chip according to an implementation of the present disclosure. The chip 600 illustrated in FIG. 6 includes a processor 610. The processor 610 can invoke and run a computer program stored in a memory to implement the methods in the implementation of the present disclosure.

In an implementation, as illustrated in FIG. 6, the chip 600 further includes a memory 620. The processor 610 can invoke and run a computer program stored in the memory 620 to implement the methods in the implementations of the present disclosure.

The memory 620 may be a single device independent of the processor 610, and may also be integrated in the processor 610.

In an implementation, the chip 600 may further include an input interface 630. The processor 610 can control the input interface 630 to communicate with other devices or chips, for example, to receive information or data from the other devices or chips.

In an implementation, the chip 600 may further include an output interface 640. The processor 610 can control the output interface 640 to communicate with other devices or chips, for example, to output information or data to the other devices or chips.

The chip can be applied to the network device in the implementations of the present disclosure, and the chip can implement corresponding procedures realized by the network device in the methods in the implementations of the present disclosure, which will not be repeated herein for simplicity.

The chip can be applied to the mobile terminal/terminal device in the implementations of the present disclosure, and the chip can implement corresponding procedures realized by the mobile terminal/terminal device in the methods in the implementations of the present disclosure, which will not be repeated herein for simplicity.

It is to be understood that the chip referred in the implementation of the present disclosure may also be referred to as a system-level chip, a system chip, a chip system, a system-on chip, or the like.

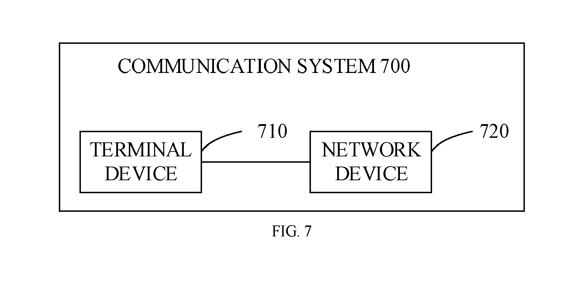

FIG. 7 is a schematic block diagram illustrating a communication system 700 according to an implementation of the present disclosure. As illustrated in FIG. 7, the communication system 700 includes a terminal device 710 and a network device 720.

The terminal device 710 can be used to implement corresponding functions realized by the terminal device 710 in the above method, and the network device 720 can be used to implement corresponding functions realized by the network device 720 in the above method, which will not be repeated herein for simplicity.

It is to be understood that the processor in the implementation of the present disclosure may be an integrated circuit chip with signal processing capability. In the implementation process, the steps of the foregoing method implementations can be completed by hardware integrated logic circuits in the processor or instructions in the form of software. The above-mentioned processor may be a general-purpose processor, a digital signal processor (DSP), an application specific integrated circuit (ASIC), a field programmable gate array (FPGA) or other programming logic devices, discrete gates or transistor logic devices, or discrete hardware components. The methods, steps, and logical block diagrams disclosed in the implementations of the present disclosure can be implemented or executed. The general-purpose processor may be a microprocessor or the processor may also be any conventional processor or the like. The steps of the methods disclosed in the implementations of the present disclosure can be directly executed and completed by a hardware decoding processor, or executed and completed by a combination of hardware and software modules in the decoding processor. The software modules can be located in a mature storage medium in the field such as a random access memory, a flash memory, a read-only memory, a programmable read-only memory, an electrically erasable programmable memory, or a register. The storage medium is located in the memory, and the processor reads information in the memory and completes the steps of the above methods in combination with its hardware.

It can be understood that the memory may be a volatile memory or a non-volatile memory, and may also include both the volatile memory and non-volatile memory. The non-volatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM) and used for external high-speed cache. By way of examples rather than limitation, various random access memories can be used, for example, a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synclink dynamic random access memory (SLDRAM), and a direct rambus random access memory (DR RAM). It is to be noted that the memory described in this specification is intended to include but is not limited to these and any other suitable types of memories.

It is to be noted that the above memories are exemplary but not used for limitation. For example, the memory in the implementation of the present disclosure may also be an SRAM, a DRAM, an SDRAM, a DDR SDRAM, an ESDRAM, an SLDRAM, and a DR RAM. That is, the memory described in the implementation of the present disclosure is intended to include but is not limited to these and any other suitable types of memories.

Implementations of the present disclosure further provide a computer-readable storage medium storing computer programs. The computer programs are executed by a processor to realize the method for configuring transmission-resource-cancelation indication information that is applied to a terminal device.

Implementations of the present disclosure further provide a computer-readable storage medium storing computer programs. The computer programs are executed by a processor to realize the method for configuring transmission-resource-cancelation indication information that is applied to a terminal device.

The sequence numbers of the foregoing implementations of the present disclosure are only for description, and do not represent the superiority of the implementations.

It should be noted that in this specification, the terms "include", "comprise", "contain", or any other variants thereof are intended to cover non-exclusive inclusion, so that a process, method, article or device including a series of elements not only includes those elements, and further includes other elements that are not explicitly listed, or elements inherent to the process, method, article, or device. If there are no more restrictions, the element defined by the sentence "include a... " or "comprise a" does not exclude the existence of other same elements in the process, method, article, or device that includes the element.

According to the description of the above implementations, those skilled in the art can clearly understand that the methods in the above implementations can be implemented by means of software plus a necessary general hardware platform. Of course, it can also be implemented by hardware, but in many cases the former is better. Based on this understanding, the technical solution of the present disclosure essentially or the part that contributes to the existing technology can be embodied in the form of a software product, and the computer software product is stored in a storage medium as described above (such as a ROM/RAM, a magnetic disk, or an optical disk), including several instructions to make a terminal device (which may be a mobile phone, a computer, a server, an air conditioner, or a network device, etc.) execute the method described in each implementation of the present disclosure.

The above are only implementations of the present disclosure, and do not limit the scope of the present disclosure. Any equivalent structure or equivalent process transformation made by using the specification and accompanying drawings of the present disclosure, when directly or indirectly applied to other related technical fields, all fall within the scope of protection of the present disclosure.

**Claims**

1. A method for configuring transmission-resource-cancelation indication information, the method being applied to a terminal device and comprising:
receiving configuration information from a network device, wherein the configuration information is used for configuring a first reference frequency-domain resource of transmission-resource-cancelation indication information of a first carrier.

2. The method of claim 1, wherein

the configuration information indicates a start point of the first reference frequency-domain resource and an end point of the first reference frequency-domain resource; or
the configuration information indicates the start point of the first reference frequency-domain resource and a resource range of the first reference frequency-domain resource.

3. The method of claim 2, wherein

the start point of the first reference frequency-domain resource is one of: a point A of the first carrier, a start point of the first carrier, a position of a center frequency of the first carrier, a start point of a reference bandwidth part (BWP), an end point of the reference BWP, a start point of a synchronization signal block (SSB), an end point of the SSB, a start point of control resource set zero (CORESET#0), and an end point of the CORESET#0; or the start point of the first reference frequency-domain resource is determined according to one of: the point A of the first carrier, the start point of the first carrier, the position of the center frequency of the first carrier, the start point of the reference BWP, the end point of the reference BWP, the start point of the SSB, the end point of the SSB, the start point of the CORESET#0, and the end point of the CORESET#0.

4. The method of claim 2 or 3, wherein the end point of the first reference frequency-domain resource is determined according to one of:
   the point A of the first carrier, the start point of the first carrier, the position of the center frequency of the first carrier, the start point of the reference BWP, the end point of the reference BWP, the start point of the SSB, the end point of the SSB, the start point of the CORESET#0, and the end point of the CORESET#0.

5. The method of claim 3 or 4, wherein the reference BWP is a BWP used for initial access, a currently activated BWP, or a target BWP configured by the network device.

6. The method of any of claims 2 to 5, wherein

the resource range of the first reference frequency-domain resource is a frequency-domain range corresponding to one or more physical resource blocks (PRBs);
the resource range of the first reference frequency-domain resource is a frequency-domain range corresponding to one or more resource block groups (RBGs); or
the resource range of the first reference frequency-domain resource is a frequency-domain range corresponding to one or more BWPs.

7. The method of claim 1, wherein the configuration information indicates the first reference frequency-domain resource via a bitmap.

8. The method of claim 7, wherein

each bit in the bitmap indicates one PRB;
each bit in the bitmap indicates one RBG; or
each bit in the bitmap indicates one BWP.

9. The method of claim 1, wherein the configuration information indicates a first BWP set, and the first reference frequency-domain resource comprises a BWP in the first BWP set.

10. The method of any of claims 1 to 9, further comprising:
    determining the first reference frequency-domain resource according to the configuration information.

11. The method of any of claims 1 to 9, wherein determining the first reference frequency-domain resource according to the configuration information comprises:
    determining the first reference frequency-domain resource according to the configuration information and physical-layer signaling.

12. The method of any of claims 1 to 9, wherein the configuration information is further used for configuring a second reference frequency-domain resource of transmission-resource-cancelation indication information of a second carrier, wherein the first reference frequency-domain resource is different from or the same as the second reference frequency-domain resource.

13. The method of claim 12, wherein the first carrier and the second carrier correspond to different terminal devices.

**14.** A method for configuring transmission-resource-cancelation indication information, the method being applied to a network device and comprising:
transmitting configuration information to a terminal device, wherein the configuration information is used for configuring a first reference frequency-domain resource of transmission-resource-cancelation indication information of a first carrier.

**15.** The method of claim 14, wherein

the configuration information indicates a start point of the first reference frequency-domain resource and an end point of the first reference-domain resource; or
the configuration information indicates the start point of the first reference frequency-domain resource and a resource range of the first reference frequency-domain resource.

**16.** The method of claim 15, wherein

the start point of the first reference frequency-domain resource is one of: a point A of the first carrier, a start point of the first carrier, a position of a center frequency of the first carrier, a start point of a reference bandwidth part (BWP), an end point of the reference BWP, a start point of a synchronization signal block (SSB), an end point of the SSB, a start point of control resource set zero (CORESET#0), and an end point of the CORESET#0; or
the start point of the first reference frequency-domain resource is determined according to one of: the point A of the first carrier, the start point of the first carrier, the position of the center frequency of the first carrier, the start point of the reference BWP, the end point of the reference BWP, the start point of the SSB, the end point of the SSB, the start point of the CORESET#0, and the end point of the CORESET#0.

**17.** The method of claim 15 or 16, wherein the end point of the first reference frequency-domain resource is determined according to one of:
the point A of the first carrier, the start point of the first carrier, the position of the center frequency of the first carrier, the start point of the reference BWP, the end point of the reference BWP, the start point of the SSB, the end point of the SSB, the start point of the CORESET#0, and the end point of the CORESET#0.

**18.** The method of claim 16 or 17, wherein the reference BWP is a BWP used for initial access, a currently activated BWP, or a target BWP configured by the network device.

**19.** The method of any of claims 15 to 18, wherein

the resource range of the first reference frequency-domain resource is a frequency-domain range corresponding to one or more physical resource blocks (PRBs);
the resource range of the first reference frequency-domain resource is a frequency-domain range corresponding to one or more resource block groups (RBGs); or
the resource range of the first reference frequency-domain resource is a frequency-domain range corresponding to one or more BWPs.

**20.** The method of claim 14, wherein the configuration information indicates the first reference frequency-domain resource via a bitmap.

**21.** The method of claim 20, wherein

each bit in the bitmap indicates one PRB;
each bit in the bitmap indicates one RBG; or
each bit in the bitmap indicates one BWP.

**22.** The method of claim 14, wherein the configuration information indicates a first BWP set, and the first reference frequency-domain resource comprises a BWP in the first BWP set.

**23.** The method of any of claims 14 to 22, further comprising:
configuring the configuration information according to the first reference frequency-domain resource.

**24.** The method of any of claims 14 to 22, wherein configuring the configuration information according to the first reference frequency-domain resource comprises:
configuring the configuration information and physical-layer signaling according to the first reference frequency-domain resource.

25. The method of any of claims 14 to 22, wherein the configuration information is further used for configuring a second reference frequency-domain resource of transmission-resource-cancelation indication information of a second carrier, wherein the first reference frequency-domain resource is different from or the same as the second reference frequency-domain resource.

26. The method of claim 25, wherein the first carrier and the second carrier correspond to different terminal devices.

27. A terminal device comprising:
a transceiver unit configured to receive configuration information from a network device, wherein the configuration information is used for configuring a first reference frequency-domain resource of transmission-resource-cancelation indication information of a first carrier.

28. A network device comprising:
a transceiver unit configured to transmit configuration information to a terminal device, wherein the configuration information is used for configuring a first reference frequency-domain resource of transmission-resource-cancelation indication information of a first carrier.

29. A terminal device comprising:

a memory;
a processor; and
a computer program stored in the memory and capable of running in the processor;
wherein the computer program, when executed by the processor, is to implement the method for configuring transmission-resource-cancelation indication information of any of claims 1 to 13.

30. A computer-readable storage medium storing a computer program, wherein the computer program, when executed by the processor, is to implement the method for configuring transmission-resource-cancelation indication information of any of claims 1 to 13.

31. A network device comprising:

a memory;
a processor; and
a computer program stored in the memory and capable of running in the processor;
wherein the computer program, when executed by the processor, is to implement the method for configuring transmission-resource-cancelation indication information of any of claims 14 to 26.

32. A computer-readable storage medium storing a computer program, wherein the computer program, when executed by a processor, is to implement the method for configuring transmission-resource-cancelation indication information of any of claims 14 to 26.

FIG. 1

FIG. 2

FIG. 3

FIG. 4

COMMUNICATION DEVICE 500

MEMORY
520

PROCESSOR
510

TRANSCEIVER
530

FIG. 5

CHIP 600

INPUT
INTERFACE
630

PROCESSOR
610

MEMORY
620

OUTPUT
INTERFACE
640

FIG. 6

COMMUNICATION SYSTEM 700

TERMINAL DEVICE 710

NETWORK DEVICE 720

FIG. 7

## INTERNATIONAL SEARCH REPORT

International application No.

**PCT/CN2019/116421**

**A. CLASSIFICATION OF SUBJECT MATTER**

H04W 72/04(2009.01)i; H04W 72/12(2009.01)i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNPAT, CNKI, EPODOC, WPI, 3GPP: 资源, 频域, 冲突, 重叠, 取消, 停止, 暂停, 阻止, 传输, 指令, 指示, URLLC, eMBB, resource, frequency, domain, collision, collide, cancel+, pre-empt+, prevent, indicat+, signal+

**C. DOCUMENTS CONSIDERED TO BE RELEVANT**

| Category* | Citation of document, with indication, where appropriate, of the relevant passages | Relevant to claim No. |
|---|---|---|
| X | CN 110366246 A (VIVO COMMUNICATION TECHNOLOGY CO., LTD.) 22 October 2019 (2019-10-22) <br> claims 1-21, description paragraphs [0033]-[0063], [0068] | 1-32 |
| X | CN 107295674 A (HUAWEI TECHNOLOGIES CO., LTD.) 24 October 2017 (2017-10-24) <br> description, paragraphs [0080]-[0156] | 1-32 |
| X | NOKIA et al. "3GPP TSG RAN WG1 Meeting #98-Bis R1-1910868" <br> *"UL inter-UE eMBB and URLLC multiplexing enhancements"*, <br> 07 October 2019 (2019-10-07), <br> section 2 | 1-32 |
| X | NTT DOCOMO, INC. "3GPP TSG RAN WG1 #98bis R1-1911179" <br> *"UL inter-UE transmission prioritization/multiplexing"*, 07 October 2019 (2019-10-07), <br> sections 2-4 | 1-32 |
| X | CATT. "3GPP TSG RAN WG1 Meeting #98bis R1-1910345" <br> *"Discussion on inter-UE UL multiplexing"*, 05 October 2019 (2019-10-05), <br> section 2.1 | 1-32 |
| A | US 2018262311 A1 (QUALCOMM INC.) 13 September 2018 (2018-09-13) <br> entire document | 1-32 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 July 2020** | **28 July 2020** |

| Name and mailing address of the ISA/CN | Authorized officer |
|---|---|
| **China National Intellectual Property Administration (ISA/ CN)** <br> **No. 6, Xitucheng Road, Jimenqiao Haidian District, Beijing 100088** <br> **China** | |
| Facsimile No. **(86-10)62019451** | Telephone No. |

Form PCT/ISA/210 (second sheet) (January 2015)

<div align="center">

**INTERNATIONAL SEARCH REPORT**
**Information on patent family members**

</div>

International application No.

**PCT/CN2019/116421**

| Patent document cited in search report | | | Publication date (day/month/year) | Patent family member(s) | | | Publication date (day/month/year) |
|---|---|---|---|---|---|---|---|
| CN | 110366246 | A | 22 October 2019 | WO | 2019184681 | A1 | 03 October 2019 |
| CN | 107295674 | A | 24 October 2017 | WO | 2017215642 | A1 | 21 December 2017 |
| US | 2018262311 | A1 | 13 September 2018 | EP | 3593479 | A1 | 15 January 2020 |
| | | | | JP | 2020511830 | A | 16 April 2020 |
| | | | | KR | 20190119065 | A | 21 October 2019 |
| | | | | WO | 2018165638 | A1 | 13 September 2018 |
| | | | | CN | 110383745 | A | 25 October 2019 |
| | | | | TW | 201836423 | A | 01 October 2018 |

Form PCT/ISA/210 (patent family annex) (January 2015)